# FASCICULE DE BREVET EUROPEEN

(11) **EP 2 727 087 B1**
(45) Date de publication et mention de la délivrance du brevet: **09.12.2020**
(21) Numéro de dépôt: 12744034.5
(22) Date de dépôt: 02.07.2012
(51) Int. Cl.: G07B 15/00

(54) **PROCÉDÉ DE CONTRÔLE DE L'UTILISATION DES FONCTIONS D'UN VÉHICULE MIS À DISPOSITION**
VERFAHREN ZUR ÜBERPRÜFUNG DER ANWENDUNG DER FUNKTIONEN EINES BEREITGESTELLTEN FAHRZEUGS
METHOD FOR CHECKING THE USE OF THE FUNCTIONS OF A PROVIDED VEHICLE

(30) Priorité: 30.06.2011 FR 1102069
(43) Date de publication de la demande: 07.05.2014
(73) Titulaire: Bluecarsharing, 92420 Vaucresson (FR)
(72) Inventeur: AARON, Francis, 78800 Houilles (FR); RODRIGUES, Ruben, 95160 Montmorency (FR); RESSAYRE, Sandrine, 78610 Auffargis (FR); LAMBRINOS, Clément, 93100 Montreuil (FR); CHEBBI, Yousra, 92130 Issy les Moulineaux (FR); AUGUSTIN, Aymeric, 92410 Ville D'Avray (FR); BARROIS, Raphaël, 75017 Paris (FR); GERON, Antoine, 78220 Viroflay (FR); GERON, Sylvain, 92190 Meudon (FR)
(74) Mandataire: IPAZ
(86) Numéro de dépôt international: PCT/FR2012/051525
(87) Numéro de publication internationale: WO 2013/001253

(56) Documents cités:
- EP-A2- 1 170 706
- FR-A1- 2 819 958
- US-A1- 2002 174 077
- US-B1- 6 947 881

## Description

L'invention concerne un procédé de contrôle de l'utilisation d'un véhicule mis à disposition d'un usager déterminé, le procédé comprenant les étapes suivantes :
- lecture d'une donnée représentant un identifiant dudit usager par des moyens numériques au sein d'une borne ou d'un véhicule connecté à ladite borne ;
- envoi de cet identifiant d'usager à un système informatique central gérant une pluralité de véhicules et une pluralité d'usagers, pour comparaison avec au moins une donnée d'une base de données d'usagers ;
- dans le cas d'une mise à disposition valide d'un véhicule, envoi par ledit système central d'au moins un message permettant l'envoi d'un signal de commande vers des moyens de commande d'au moins une fonction dudit véhicule attribué, ou d'une infrastructure à laquelle il est connecté.

L'invention concerne en outre un tel procédé dans lequel une identification sur le véhicule permet de valider l'activation de telles fonctions par comparaison de cette nouvelle identification avec un identifiant précédemment mémorisé comme valide dans une mémoire locale au véhicule.

### Etat de la technique

La commande des différentes fonctions d'un véhicule à moteur est souvent contrôlée par des systèmes régissant l'utilisation du véhicule et empêchant un usage non autorisé du véhicule.

Ainsi, dans la plupart des véhicules fermés, l'accès à l'intérieur du véhicule est contrôlé par un verrouillage des ouvrants, portières ou trappe à essence, commandé par une clé. Une telle clé est un objet matériel qui peut présenter différents types de fonctionnements : en général un fonctionnement mécanique par un profil physique unique interagissant avec une serrure mécanique ; et souvent un fonctionnement électronique par exemple par communication du véhicule avec un transpondeur RFID ou une carte à puce.

Le démarrage du moteur et la libre rotation du volant de direction sont en général conditionnés aussi par des moyens de verrouillage, souvent les mêmes que pour l'ouverture des accès, avec possiblement un verrouillage électronique supplémentaire pour le démarrage du moteur par exemple par saisie d'un code ou par communication avec un transpondeur RFID ou une carte à puce.

Typiquement, pour mettre un véhicule à disposition de quelqu'un, par exemple pour un prêt ou une location, on lui confie la clé et si besoin le code de verrouillage complémentaire.

Pour gérer un parc important de véhicules mis à disposition de façon temporaire, comme pour un service de location de voitures, il existe des systèmes permettant de stocker les clés des différents véhicules, parfois avec des moyens de détection de la présence de chaque clé et des moyens de verrouillage de chaque clé dans son emplacement, comme décrit par exemple dans le document US 5,801,628. Les documents EP 1 170 706 A2 et US 2002/174077 A1 décrivent d'autres procédés de contrôle de l'utilisation d'un véhicule, selon le préambule de revendication 1.

Cependant, l'utilisation de ces méthodes de verrouillage présente des inconvénients. Par exemple, du fait de l'aspect matériel de l'objet constituant la clé de verrouillage, chaque clé est unique et est attribuée à un véhicule unique. Il est donc nécessaire de transporter la clé pour la confier à un usager, et/ou de transporter des doubles ou des passes pour les personnels chargés d'entretenir ou de déplacer les véhicules du parc. L'utilisation de codes de verrouillage complémentaires présente en outre un problème supplémentaire, du fait qu'un code peut facilement être diffusé à de nombreuses personnes non autorisées sans que les responsables en soient aussitôt au courant.

Le problème est encore plus compliqué lorsque les véhicules peuvent être rendus par les usagers et déposés à des emplacements différents de celui où ils ont été pris en charge, et/ou lorsque ces véhicules présentent en outre des fonctions de rechargement qui sont liées à la présence d'une borne de chargement.

Cette gestion dans le cadre d'un parc de véhicules fonctionnant en libre service peut présenter en outre des problèmes supplémentaires, par exemple parce que ces véhicules sont censés être à la fois personnalisés temporairement, pour une durée parfois très courte comme inférieure à une journée voire à une ou deux heures, tout en restant interchangeables d'une place à l'autre et d'un usager à l'autre.

Un but de l'invention est de pallier les inconvénients précités, et en particulier :
- de simplifier et fiabiliser la gestion et le contrôle des différents véhicules mis à disposition par exemple au début et à la fin d'une période d'attribution ;
- de rendre cette gestion plus précise et plus souple ;
- de simplifier et de répartir le travail des opérateurs chargés de gérer ou déplacer ou entretenir les véhicules ;
- et permettre la gestion de différentes possibilités de services, en particulier en ouvrant la possibilité d'adapter le contrôle de l'utilisation du moment d'utilisation ou du type de contrat ;
- de limiter les risques d'interaction entre la gestion des véhicules et la sécurité des usagers ou de l'environnement des véhicules.

### Exposé de l'invention

L'invention propose un procédé de contrôle de l'utilisation d'un véhicule, notamment à moteur, mis à disposition d'un usager déterminé, selon la revendication 1.

On notera que le système central peut envoyer une pluralité de données différentes déclenchant chacune l'activation d'un signal de commande différent prédéterminé. Certaines données peuvent également être stockées dans la mémoire du véhicule, par exemple dans la mémoire de l'unité de commande, qui garde ces données en mémoire suite à la réception du message de validation ou suite à la génération du signal de commande.

L'invention permet ainsi de conditionner certaines fonctions du véhicule à l'état instantané de validité de l'identifiant de l'usager qui tente d'activer ces fonctions. Un tel fonctionnement permet de fiabiliser et de rendre considérablement plus souple la gestion et le contrôle de nombreux véhicules en parallèle, en particulier dans le cadre d'un service de location de courte ou très courte durée.

Cette validation par identification et communication avec le système central peut être effectuée pour différents types de fonctions, par exemple pour le verrouillage et déverrouillage des ouvrants. L'usager utilise alors une carte d'identification délivrée par le loueur de la même façon qu'il utiliserait une télécommande ou une carte d'activation numérique avec une voiture personnelle.

Selon les modes de réalisation, la communication avec le système central peut avoir lieu pour certains types d'opérations. Elle peut aussi avoir lieu à chaque activation, ou à certaines occasions seulement.

Selon une particularité de l'invention, le message de validation est transmis à une unité de commande au sein du véhicule attribué et déclenche une mémorisation dudit identifiant d'usager en tant qu'identifiant d'usager valide, dans des moyens de mémoire de ladite unité de commande, par exemple dans un emplacement mémoire dédié à l'identifiant d'un usager actuellement valide voire de plusieurs usagers valides.

Selon cette particularité, le procédé selon l'invention peut en outre comprendre au moins une itération d'une opération d'activation comprenant les étapes suivantes :
- lecture d'une donnée d'identifiant d'usager, au sein dudit véhicule, par des moyens de lecture communiquant avec l'unité de commande ;
- validation de cette donnée d'identifiant par comparaison avec la donnée d'identifiant valide mémorisée dans ladite unité de commande ;
- en fonction du résultat de cette vérification, envoi ou non par ladite unité de commande d'au moins un signal de commande, dit signal de commande d'identification, à des moyens de commande d'au moins une fonction dudit véhicule ou d'une infrastructure à laquelle il est connecté.

Ainsi, une fois que l'usager s'est identifié une première fois par exemple sur une borne de location, des activations de fonctions du véhicule par identification locale au véhicule (passage de la carte ou du badge sur le lecteur) peuvent être effectuées plus rapidement et de façon plus fiable puisqu'elles ne nécessitent plus de réaliser une connexion sans fil à distance.

Selon une autre particularité, la réception du message de validation déclenche en outre une mémorisation dans des moyens de mémoire de l'unité de commande d'un état d'autorisation de démarrage de moteur.

Il est ainsi possible de gérer pour le démarrage du moteur un niveau d'autorisation dissocié des autres fonctions du véhicule.

Différentes autres particularités peuvent être implémentées au sein d'un même mode de réalisation, ensemble ou séparément, et par exemple les particularités suivantes.

Selon une particularité, le signal de commande généré, notamment le signal de commande d'identification, interagit avec au moins une serrure du véhicule pour permettre l'ouverture ou la fermeture des portes. Il peut aussi interagir avec la trappe logeant le connecteur électrique du véhicule. Le véhicule peut comprendre un ou plusieurs lecteurs, l'identification d'un usager auprès d'un lecteur pouvant activer un ou plusieurs signaux de commande, chaque lecteur pouvant activer des signaux partiellement ou complètement distincts des signaux activés à l'aide des autres lecteurs.

Selon une autre particularité, le signal de commande généré interagit avec le circuit de démarrage ou d'autorisation de démarrage (anti-démarrage) ; ou directement le moteur pour permettre le démarrage du véhicule. Le démarrage du véhicule peut être conditionné par une pluralité de conditions nécessaires vérifiées ensemble ou séparément pour permettre le départ : validation de l'utilisateur, état d'autorisation de démarrage tel qu'indiqué plus haut, état d'un moyen de démarrage tel qu'une clé (de préférence prisonnière dans la serrure) ou bouton de démarrage, et possiblement d'autres conditions relatives aux états de différents éléments du véhicule.

Selon une autre particularité, la désactivation de l'anti-démarrage peut également activer automatiquement certaines autres fonctions du véhicule, par exemple, l'allumage d'un PC embarqué, sur le véhicule ou formant interface entre l'usager et un site informatique de gestion du parc, aussi appelé site central ou organe central.

Selon une autre particularité, si l'opération d'activation porte sur l'ouverture ou la fermeture des portes, l'unité de commande du véhicule fait un test prédéterminé sur le statut des serrures avant l'activation du signal de commande, et active le signal de commande en fonction du résultat de ce test. Certaines conditions supplémentaires peuvent alors être vérifiées en fonction de l'état du véhicule. Par exemple, on peut tester si le véhicule est en mode roulage, et ne pas accepter le verrouillage des portes le cas échéant.

Le système central peut, en plus des données envoyées suite à l'identification, envoyer des données de façon spontanée, par exemple lorsqu'un évènement se produit dans le système auquel le véhicule n'a pas accès. Un tel événement peut être par exemple la signification au véhicule de l'arrêt de la location par l'usager (lorsqu'il indique à une station qu'il souhaite rendre le véhicule, par exemple en présentant son moyen d'identification dans cette station). Cet événement spontané peut aussi être une alerte relative à la borne de charge à laquelle est temporairement connecté ou associé ce véhicule ou fournie par cette borne, par exemple une alerte d'indisponibilité de la borne.

Selon une autre particularité, le procédé comporte également une vérification de l'identifiant lu par rapport à un ou plusieurs identifiants dits de secours (ou identifiants universels), qui sont stockés dans des moyens de stockage de l'unité de commande du véhicule. Cet identifiant de secours peut être associé par exemple à la carte d'un opérateur du service de location. Il permet à ces opérateurs d'avoir accès aux véhicules même lorsque le réseau reliant le véhicule à l'organe central n'est pas accessible temporairement et/ou localement.

Selon un autre aspect de l'invention, il est proposé un procédé de gestion d'un parc de véhicules à moteur mis à disposition d'une pluralité d'usagers, et comprenant un contrôle de chacun desdits véhicules par un tel procédé de contrôle.

Selon un autre aspect de l'invention, il est proposé une installation selon la revendication 9.

Selon l'invention, le véhicule comprend au moins une unité de commande agencée pour communiquer avec un système informatique de gestion d'une pluralité de véhicules, caractérisé en ce que l'unité de commande est connectée au sein du véhicule avec :
- des moyens d'identification d'un usager accessibles depuis l'extérieur et sans ouvrir ledit véhicule ;
- des moyens de communication sans fil avec ledit système informatique de gestion, notamment par téléphonie numérique sans fil telle que GPRS ;
- des moyens de commande d'une ou plusieurs fonctions dudit véhicule ;
- optionnellement, des moyens de détection d'état d'un ou plusieurs éléments dudit véhicule.

Selon une particularité de l'invention, un tel véhicule comprend en outre des moyens de commande d'une ou plusieurs fonctions dudit véhicule, qui sont agencés pour ne pouvoir être activés que par une opération d'activation selon un tel procédé de contrôle.

Il est ainsi possible d'obtenir une fréquence plus importante de contrôle de l'utilisation.

D'autres particularités et avantages de l'invention ressortiront de la description détaillée d'un mode de mise en œuvre nullement limitatif, et des dessins annexés sur lesquels :
- la FIGURE 1 est une représentation schématique d'un exemple de système de gestion globale d'un parc de véhicules électriques proposé à la location ;
- la FIGURE 2 est une représentation schématique de certains des liens fonctionnels existant au sein d'une unité de commande d'un véhicule géré selon l'invention, et entre cette unité de commande et son environnement ;
- les FIGURE 3 et FIGURE 4 représentent deux parties d'un organigramme schématique illustrant le procédé selon l'invention, dans un exemple de mode de réalisation comprenant une mémorisation locale d'un identifiant d'usager valide et d'une autorisation moteur ;

- la FIGURE 5 est un schéma illustrant l'activation du groupe motopropulseur dans le même exemple de mode de réalisation de l'invention ;
- la FIGURE 6 est un schéma temporel illustrant un exemple d'un cycle possible de fonctionnement d'un véhicule géré selon l'invention.

### Description détaillée

L'invention est ici décrite dans le cadre de sa mise en œuvre au sein d'un système d'autopartage, qui propose une location courte durée de véhicules automobiles de type véhicule particulier. Ce système est prévu pour proposer cette location en libre-service, de façon interchangeable entre différentes stations réparties au sein d'une zone de fonctionnement prédéterminée, et dans lequel tous les véhicules peuvent indifféremment être pris en location dans une station et déposés dans une autre.

L'invention peut cependant être mise en œuvre dans des systèmes ou des services plus ou moins similaires ou différents de celui décrit ici.

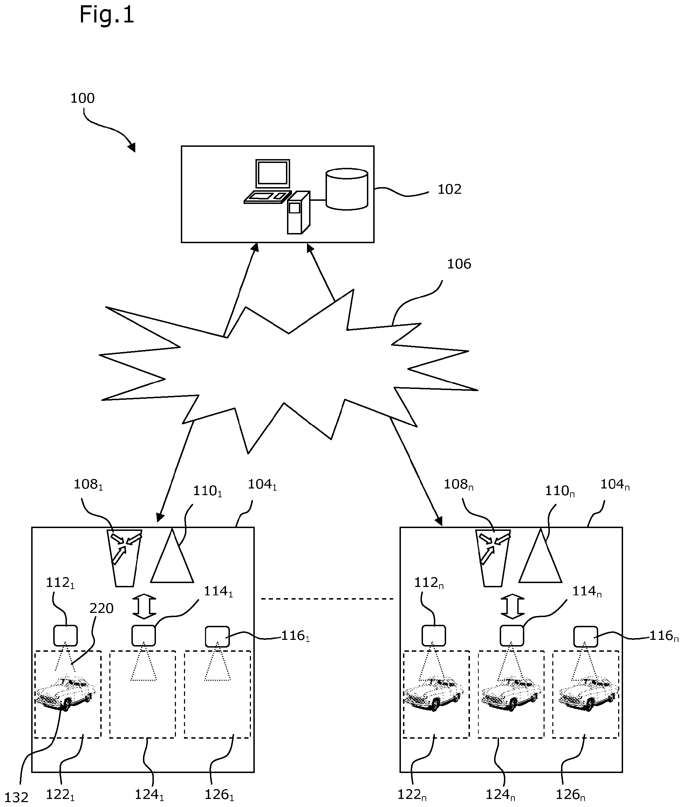

La FIGURE 1 est une représentation schématique d'un système gestion globale d'un tel parc de véhicules électriques proposé à la location et des stations correspondantes.

Le système 100 représenté sur la FIGURE 1 comprend un site informatique central 102 (également appelé organe central dans la suite de la description) connecté à plusieurs sites de location 104₁-104ₙ, ou stations, au travers d'un réseau de communication 106 par exemple par ADSL ou sans fil comme GPRS.

Le site central 102 peut être connecté directement à chacune des bornes d'un site de location 104 au travers du réseau 106 ou seulement à la borne d'abonnement et/ou à la borne de location et/ou aux bornes de chargement 112-116.

Chaque site de location 104 comprend une borne de location 110 avec interface informatique tactile et sonore, et peut comprendre en outre une borne d'abonnement 108 pour l'enregistrement d'un nouvel abonné ou le renouvellement d'un contrat d'abonnement.

Les différents éléments du système sont en communication les uns avec les autres, notamment à l'aide d'un réseau GPRS. Ainsi, tous les véhicules, bornes de location et le site central sont équipés de puces GSM, et le site central communique avec les bornes de location 110 et avec les bornes d'abonnement 108 par un réseau ADSL et/ou l'Internet.

Au moins deux bornes d'un même site de location sont connectées entre elles au travers d'une connexion locale, de préférence filaire (non représentée) et par exemple en RS422.

Typiquement, la borne de location 110 collecte toutes les informations relatives à la station 104 à laquelle elle appartient, et est équipée de moyens de télécommunications filaires ou sans fil pour communiquer avec le site central 102.

Chaque borne de recharge 112-116 est associée à une place de stationnement 122-126 de la station 104, et permet ainsi le chargement des batteries des véhicules 132 situés sur ces emplacements (par exemple pour un véhicule électrique ou hybride).

Le site central 102 est agencé pour se connecter par réseau sans fil, par exemple GPRS, à chacun des véhicules 132, lesquels comprennent un boîtier de connexion avec un ou plusieurs éléments du véhicule et/ou une interface de communication avec l'usager. Chaque véhicule peut comprendre en outre une interface permettant à l'usager de communiquer avec le site central 102 ou avec un opérateur humain.

Le site central 102 est aussi agencé pour échanger des informations avec un appareil de communication portable tel qu'un PDA, un téléphone portable, etc.

Le système comprend une interface utilisateur, par exemple dans le site central 102, qui permet à des opérateurs humains d'utiliser ce site central 102 pour gérer une pluralité de véhicules comprenant chacun une unité de commande apte à communiquer avec le système central 102 et avec différents organes du véhicule.

Les usagers peuvent interagir avec les différentes bornes ainsi qu'avec les différents éléments des véhicules. En outre, le service de location de véhicule avec le système selon l'invention peut fonctionner à l'aide de personnels opérateurs mobiles, munis chacun d'un terminal mobile tel qu'un PDA, qui peuvent intervenir dans le service en tant que « super-utilisateurs ».

L'organe central 102 du système comprend une base de données abonnés et des moyens de comparaison de la base de donnée abonnés avec un numéro prédéterminé fourni par exemple par une borne de location 110 ou une borne abonnement 108, ou par un véhicule 132.

Dans le cadre d'un système tel que celui prévu pour mettre en œuvre le service selon l'invention, par exemple pour un service d'autopartage, le procédé de mise à disposition d'un véhicule à destination d'un usager (abonné du service) comprend par exemple les étapes suivantes :
- identification d'un usager auprès d'une borne ou d'un véhicule (notamment par lecture d'un moyen d'identification) ;
- vérification auprès d'un organe central du système de la validité du moyen d'identification, par exemple par comparaison avec une liste d'abonnés ou de contrats au sein d'une base de données gérée par le site central 102, ou par comparaison d'une donnée secrète commune entre le moyen d'identification de l'usager et une donnée calculée ou mémorisée par le site central ou par le véhicule ;
- si l'usager est un usager valide au moment de l'identification, activation immédiate ou différée d'un signal de commande qui interagit avec au moins un organe du véhicule ou avec un autre élément du système, tel que la borne de charge 122 à laquelle est connecté le véhicule. Ce signal de commande peut être activé directement par l'organe central ou, plus généralement par une unité de commande du véhicule suite à la réception de données depuis l'organe central.

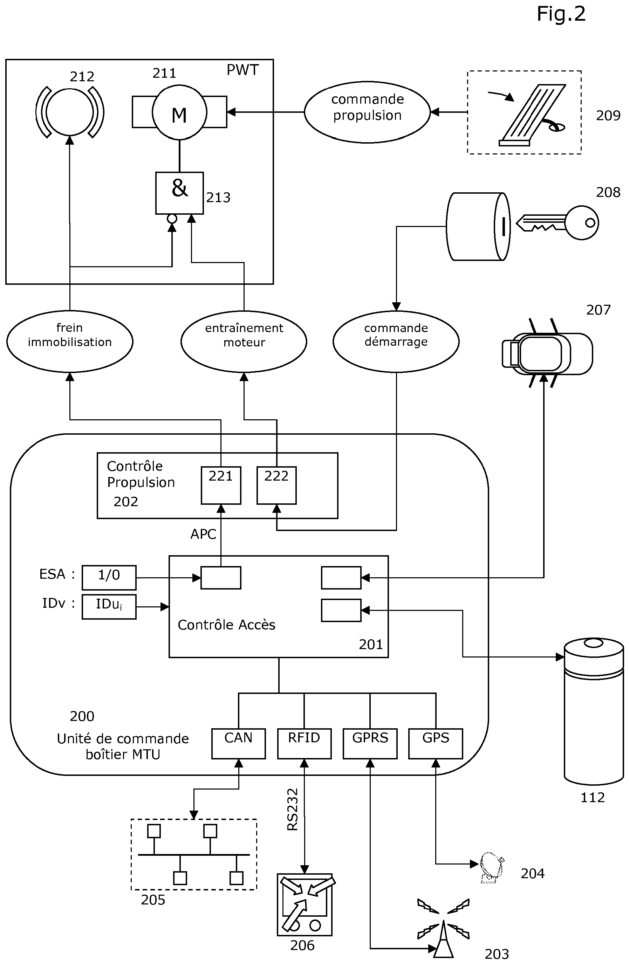

Ainsi qu'illustré en FIGURE 2, le véhicule est muni d'un lecteur d'identification, par exemple un lecteur 206 de type RFID, ou un lecteur de carte à puce, ou un lecteur de code-barres, voire possiblement un récepteur radio local tel que Bluetooth ou un clavier de saisie. Le lecteur RFID peut être collé sur la carrosserie du véhicule, notamment à l'intérieur du pare-brise de celui-ci, où il est facilement visible et accessible pour l'usager. Il comprend également un élément de signalisation, par exemple un signal lumineux par une ou plusieurs LED ou couleurs de LED. Cet élément de signalisation est utilisé pour l'indication de l'état du lecteur, par exemple en indiquant si le lecteur est en fonctionnement ou pas, et/ou si l'usager ou est validé ou non, et possiblement pour l'activation de quelle fonction.

Le véhicule comprend une antenne 203 de communication par téléphonie numérique GPRS, permettant la communication du véhicule avec l'organe central 102. Il peut notamment comprendre deux antennes positionnées de part et d'autre du tableau de bord pour assurer une meilleure transmission d'informations.

Le véhicule comprend une unité de commande 200 - ou boitier MTU3. Cette unité de commande 200 est reliée en particulier : au lecteur 206, à l'antenne 203, au bus CAN (« Controller Area Network ») 205 du véhicule pour obtenir des informations sur l'état des différents organes du véhicule, et à certains organes du véhicule tels que les actionneurs 207 de verrouillage des ouvrants pour permettre la commande de ceux-ci. L'unité de commande comprend des moyens de calcul numérique et de traitement informatique, et fait l'interface entre ces différents éléments. L'unité de commande peut comprendre aussi des moyens de stockage de données. On notera que cette unité de commande est de préférence située à un emplacement du véhicule auquel elle n'est pas aisément accessible, depuis l'extérieur du véhicule et/ou depuis l'intérieur.

Au sein de l'unité de commande 200, un module fonctionnel de contrôle d'accès 201 communique en particulier avec le système central 102 par GPRS 203, avec différents organes du véhicule par le bus CAN (« Controller Area Network ») 205, avec le système 207 de verrouillage et de détection d'ouverture des portières et coffre et trappe de connexion, avec un ou plusieurs lecteurs d'identification RFID 206, et avec un module GPS ou une ou plusieurs antennes GPS 204. Optionnellement, ce module 201 peut aussi communiquer avec la borne de rechargement 112, par exemple par un fil pilote du câble de connexion utilisé pour le rechargement.

Ce module de contrôle d'accès 201 reçoit et utilise différentes données en provenance des organes du véhicule pour déterminer si celui-ci peut être autorisé à se déplacer. Pour cela, il vérifie la valeur mémorisée d'une donnée d'autorisation moteur ESA (« Engine Start Authorization ») mémorisée dans l'unité de commande 200. Si la valeur ESA mémorisée permet la mise en route du moteur, il vérifie aussi certains autres paramètres et états du véhicules et génère un signal dit APC qui représente une autorisation générale de faire rouler le véhicule, du point de vue de la gestion du véhicule par le fournisseur du service de mise à disposition. Ce signal peut être désigné comme un signal de commande d'autorisation de roulage.

Ce signal APC est transmis à un module de contrôle de propulsion 202, dont les sorties sont connectées aux entrées fonctionnelles du groupe motopropulseur PWT du véhicule.

Dans une configuration typique, ce véhicule est un véhicule de série tel qu'utilisable directement par un individu en dehors de toute gestion de parc ou de service automobile.

Dans la configuration décrite ici, le groupe motopropulseur PWT de ce véhicule comporte :
- une entrée « Immobilisation » qui active une immobilisation du véhicule et/ou du moteur, par exemple la fonction 212 de frein de stationnement et/ou d'anti-démarrage antivol ; et
- une entrée « Crank » qui active le moteur d'entraînement, par exemple à travers le démarrage ou la mise en ordre de marche du moteur 211, déclenché manuellement par l'utilisateur, la puissance délivrée étant ensuite réglée par une commande d'accélération telle qu'une pédale d'accélérateur 209.

Ce groupe motopropulseur PWT comprend ici en outre un étage logique 213, qui assure que le moteur 211 ne peut être démarré (ou ne peut pas délivrer sa puissance) que si l'immobilisation est désactivée.

Dans cette configuration, le module de contrôle de propulsion 202, comprend un premier relais ou un étage de relais 221 qui est commandé en binaire par le signal de commande APC issu du module fonctionnel de contrôle d'accès. Sa sortie est connectée à l'entrée « immobilisation » du groupe PWT, et commande ainsi la désactivation de l'immobilisation lorsque l'autorisation générale de faire rouler le véhicule est fournie par le module contrôle d'accès 201.

Le module de contrôle de propulsion 202, comprend un deuxième relais ou un étage de relais 222 qui est commandé en binaire par un signal de commande issu de l'organe de commande de démarrage du véhicule, par exemple une serrure de démarrage à clé 208 ou tout autre dispositif standard comme un bouton de démarrage. La sortie de ce deuxième relais 222 est connectée à l'entrée « moteur » du groupe PWT, et commande ainsi l'activation du moteur lorsque le conducteur actionne la commande de démarrage d'une façon standard pour le type de véhicule concerné.

D'autres configurations de groupe motopropulseur peuvent aussi être envisagées dans le cadre de l'invention. Par exemple dans une configuration sans logique interne, un tel étage logique peut être intégré dans l'unité de commande 200.

L'étage logique peut aussi être configuré pour conditionner la commande d'activation moteur à une valeur du signal de commande APC qui représente une autorisation générale de rouler, par exemple dans une autre configuration où le groupe motopropulseur ne comporte pas d'entrée électrique de commande de l'immobilisation.

On voit ainsi que le véhicule utilisé peut être d'un type standard prévu pour une utilisation individuelle standard, et être intégré de façon simple et économique dans un parc de véhicules gérés pour une mise à disposition d'usagers multiples, en particulier de courte durée et pour des trajets de point à point sans retour au point de départ.

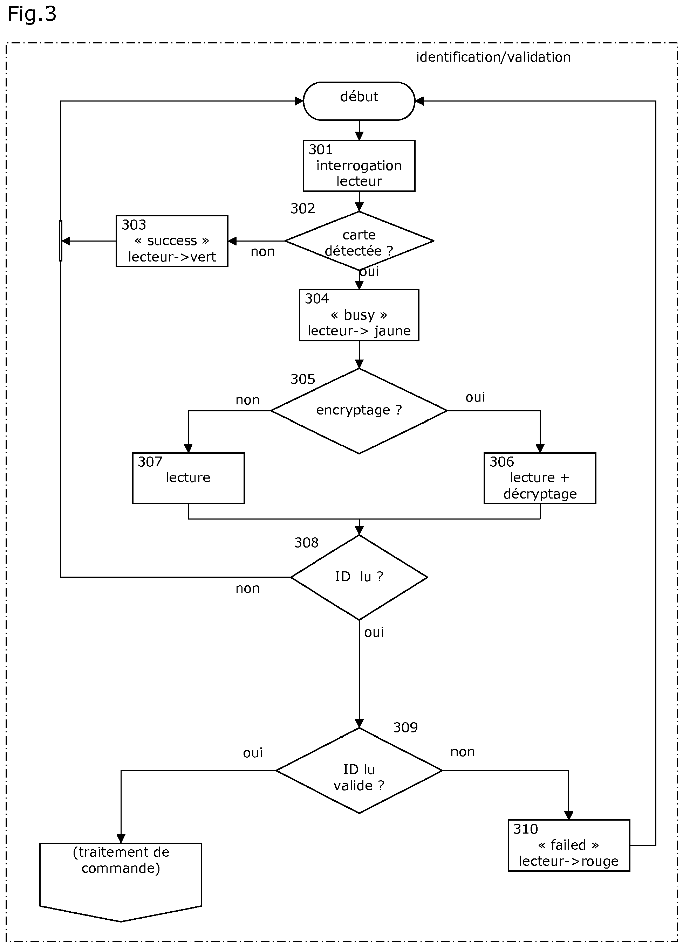

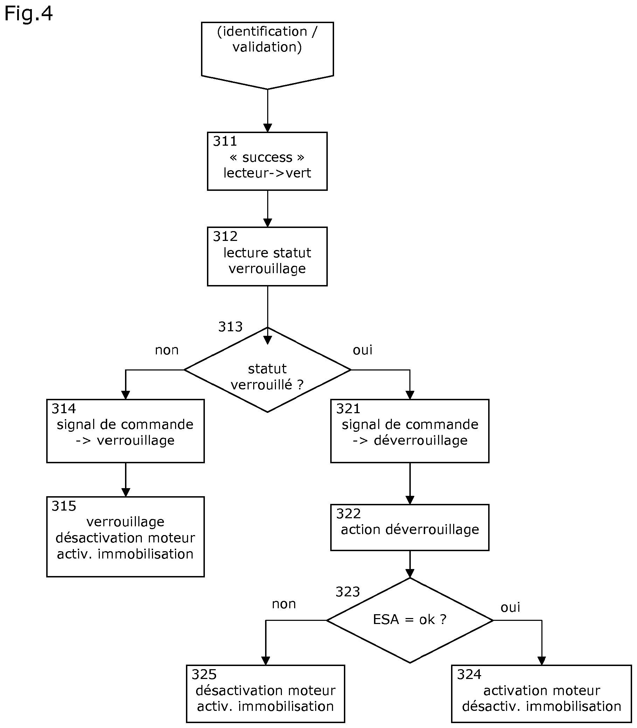

Les FIGURE 3 et FIGURE 4 forment deux parties d'un organigramme schématique illustrant une partie du procédé selon l'invention, dans un exemple de mode de réalisation particulier de l'invention dans lequel un message de validation est envoyé par le système central au véhicule, avant le procédé décrit ci-après, lors de la validation de location qui déclenche une mémorisation dans l'unité de commande 200 du véhicule 132 d'un identifiant d'usager valide IDv et d'une autorisation moteur ESA.

On notera que d'autres variantes sont possibles. Le véhicule peut par exemple ne communiquer avec le système central en vue d'identifier un usager que lorsque l'usager a déjà présenté son moyen d'identification au véhicule. Dans un tel exemple, le système central envoie au véhicule le message de validation seulement lorsque le véhicule le demande, par exemple lorsque l'usager s'identifie auprès du véhicule pour la première fois après avoir déclenché la location sur la borne de location.

L'activation du verrouillage des portes et la gestion du démarrage moteur sont ensuite gérées par lecture et identification au niveau du lecteur RFID 206 du véhicule et validation locale au véhicule, comme illustré dans cet organigramme.

De façon permanente, 24 h sur 24 et 7 jours sur 7, l'unité de commande ou « MTU » interroge 301 régulièrement le lecteur 206, par exemple tous les 500ms. Le MTU met à jour le statut du lecteur en envoyant la valeur de statut avec l'événement suivant, de façon à ce que les usagers puissent voir en permanence si le lecteur fonctionne. Tant qu'aucune carte n'est détectée, une instruction « success » est transmise 303 au lecteur, qui reste affiché « disponible » par exemple en vert.

Lorsqu'une carte est détectée 302, le lecteur lit l'identifiant de la puce de la carte d'identification et le mémorise pour usage ultérieur. Le MTU envoie 304 une instruction « busy » au lecteur, qui s'affiche « occupé », par exemple en jaune. La valeur du paramètre de lecture est testée 305 dans le MTU. Si la valeur indique un cryptage, le MTU envoie 306 au lecteur une instruction de lecture et décryptage, sinon il envoie 370 une instruction de lecture simple.

Si le lecteur lit un identifiant d'usager dans la puce de la carte, il vérifie 309 si cet identifiant d'usager est valide pour ce véhicule, par comparaison avec l'emplacement mémoire d'identifiant d'usager valide IDv, ou avec un ou plusieurs emplacements mémoires contenant de façon permanente les identifiants d'un ou plusieurs « super-utilisateurs » représentant par exemple des opérateurs du service.

Si l'identifiant usager lu n'est pas valide, le MTU envoie 310 une instruction « failed » au lecteur, qui affiche « erreur » par exemple en rouge. Optionnellement, le MTU peut mémoriser et/ou envoyer au système central 102 une information représentant le rejet de la requête.

Si l'identifiant usager lu est valide, le MTU envoie 311 une instruction « success » au lecteur qui s'affiche « disponible » par exemple en vert. Optionnellement, le MTU peut mémoriser et/ou envoyer au système central 102 une information représentant l'identification d'un usager valide.

Le MTU détecte 312 l'état actuel du verrouillage des ouvertures du véhicule, par exemple par une requête envoyée au véhicule par le bus CAN.

Si l'état actuel est déverrouillé, le MTU envoie 314 au véhicule un signal de commande de verrouillage des ouvrant, le véhicule exécute 315 alors les actions de verrouillage des ouvrants 207. De lui-même sous l'effet du verrouillage, ou sous l'effet d'un signal de commande APC reçu du MTU et indiquant « interdit », le groupe motopropulseur PWT exécute les actions de désactivation du moteur 211 et d'activation de l'anti-démarrage 212.

Si l'état actuel est verrouillé, le MTU envoie 321 un signal de commande de déverrouillage des ouvrants et le véhicule déverrouille 322 les ouvrants 207.

Le MTU teste 323 alors la valeur de la donnée d'autorisation de démarrage moteur dans l'emplacement mémoire ESA correspondant à l'emplacement mémoire d'identifiant d'usage valide IDv qui a été accepté. Typiquement, cette donnée ESA vaut toujours « autorisé » pour les super-utilisateurs, et est remise à « interdit » pour les usagers dès la fin de la location.

Si la donnée ESA indique une autorisation, le MTU envoie 324 au véhicule un signal de commande d'autorisation APC indiquant « autorisé », et le groupe motopropulseur PWT exécute les actions d'activation du moteur 211 et de désactivation de l'anti-démarrage 212.

Si la donnée ESA n'indique pas une autorisation, le MTU envoie 325 au véhicule un signal de commande d'autorisation APC indiquant « interdit », et le groupe motopropulseur PWT exécute les actions de désactivation du moteur 211 et d'activation de l'anti-démarrage 212.

Ainsi, on voit que l'utilisateur ne peut plus démarrer si la location est terminée, mais peut encore verrouiller ou déverrouiller les ouvrants jusqu'à l'effacement de son identifiant usager IDuᵢ de la mémoire IDv du véhicule par exemple lors de la mémorisation de l'identifiant usager IDuᵢ₊₁ d'un nouvel usager Uᵢ₊₁ pour une nouvelle location.

Il est à noter qu'une exclusion réciproque est ici réalisée automatiquement 213 au sein du groupe motopropulseur PWT entre l'activation de l'anti-démarrage 212 et l'activation du moteur 211. Dans d'autres configurations du groupe motopropulseur qui ne prévoiraient pas une telle exclusion réciproque, le MTU peut être agencé pour la réaliser lui-même et envoyer systématiquement deux signaux de commande donnant les instructions nécessaires séparément au moteur 211 et à l'anti-démarrage.

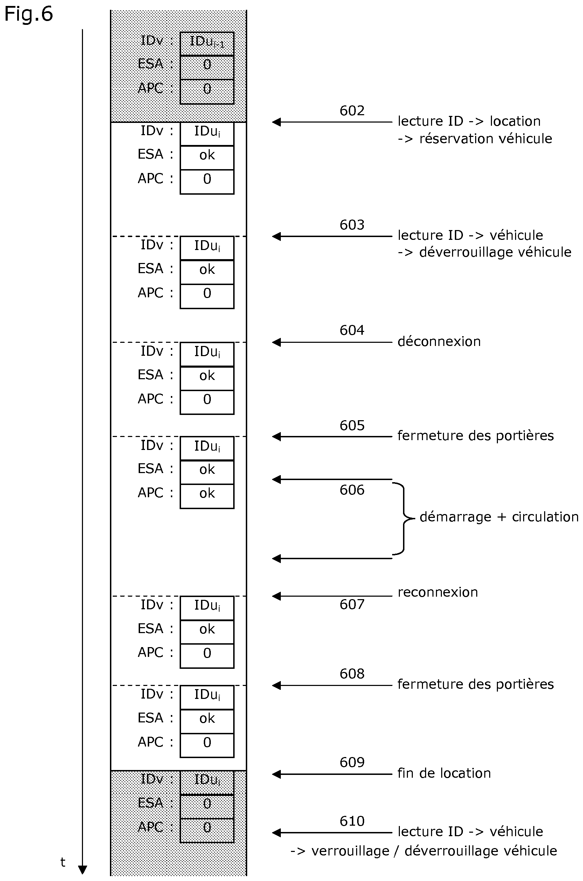

La FIGURE 6 est un schéma temporel illustrant un exemple d'un cycle possible de fonctionnement d'un véhicule géré selon l'invention.

Avant l'arrivée d'un nouvel usager Uᵢ, un véhicule disponible 132 est stocké sur un emplacement 122 et connecté à sa borne de recharge 112 (période en gris sur la FIGURE 6). Dans la mémoire de son unité de commande 200, l'emplacement mémoire d'usager valide IDv contient la valeur IDuᵢ₋₁ correspondant au dernier utilisateur de ce véhicule, ou aucune valeur. L'emplacement mémoire d'autorisation moteur ESA contient une valeur d'interdiction (ici « 0 »).

Un nouvel usager Uᵢ utilise 602 un objet d'identification ou une carte d'identification pour s'identifier par communication avec un lecteur d'une borne de location 110ᵢ, ou possiblement d'un véhicule, et obtenir la mise à disposition un véhicule disponible situé sur un emplacement 124ᵢ, de préférence dans la station locale 104ᵢ. Si besoin, le système peut lui attribuer un véhicule présent dans une autre station 104ₙ proche de celle où il se trouve.

Une fois qu'un véhicule 132 lui est attribué, le système central 102 communique avec l'unité de commande 200 du véhicule attribué et lui transmet l'identifiant IDuᵢ de cet usager Uᵢ, réservant ainsi ce véhicule pour cet usager. Cet identifiant IDuᵢ d'usager est alors mémorisé dans l'unité de commande du véhicule réservé en tant qu'identifiant d'usager valide, dans des moyens de mémoire IDv. Simultanément, ou possiblement après un certain délai en fonction des conditions de la mise à disposition contractée, le système central 102 envoie aussi à l'unité de commande un signal d'autorisation moteur, qui est mémorisé en modifiant la valeur de la donnée d'autorisation moteur ESA, par exemple en la mettant à la valeur « 1 » ou « ok ».

Optionnellement, le véhicule concerné peut émettre un signal visuel ou sonore d'information permettant à l'usager de le localiser plus facilement. Pour les mêmes raisons, la borne de location 110 peut aussi envoyer un signal à la borne de rechargement 112 à laquelle ce véhicule 132 est connecté, et cette borne de rechargement affiche un signal d'information comme par exemple une lumière bleue clignotante.

Une fois arrivé au véhicule qui lui réservé, l'usager utilise la même carte d'identification ou le même identifiant IDuᵢ pour s'identifier 603 par communication avec le lecteur 206 de ce véhicule, par exemple à travers le pare-brise.

L'unité de commande vérifie que l'identifiant IDuᵢ lu par le lecteur 206 du véhicule est bien le même que celui mémorisé dans sa mémoire d'identifiant d'usager valide IDv, et génère un signal de commande de déverrouillage 207 des portières et de la trappe de connexion du véhicule.

L'usager déconnecte 604 le câble de rechargement qui reliait le véhicule et la borne de rechargement 112.

L'usager referme 605 la trappe du véhicule, s'installe dans le véhicule et referme 605 les portières.

De façon réitérée, ou lorsque l'usager commande le démarrage 606, l'unité de commande vérifie que le véhicule est en ordre de marche et par exemple que les ouvrants sont refermés et que l'identifiant d'usager valide n'a pas été modifié par le système central 102 et que la valeur d'autorisation moteur est toujours « ok », et génère un signal APC d'autorisation générale valant « ok » ou « 1 ».

L'usager commande 606 alors le démarrage du moteur, puis commence une phase de circulation.

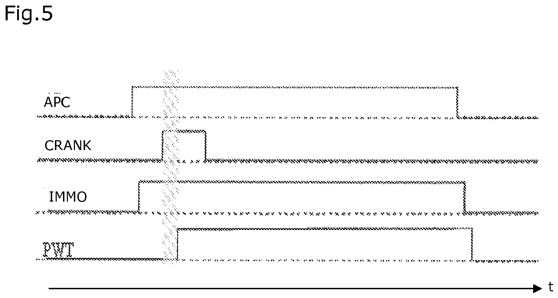

La FIGURE 5 illustre la séquence de démarrage 606 du moteur 211, par un schéma temporel qui représente (de haut en bas) les états respectifs :
- du signal de commande APC d'autorisation générale,
- de l'entrée « CRAN » d'activation moteur du groupe motopropulseur PWT,
- de l'entrée « immobilisation » du groupe motopropulseur PWT, ainsi que
- du signal « PWT » d'activation effective du moteur à l'issue de l'étage logique 213.

On notera la barre verticale grise qui figure une temporisation pouvant être définie au sein de la logique ou du mécanisme du groupe motopropulseur.

Lorsqu'il n'a plus besoin du véhicule, l'usager le reconnecte 607 à une borne de rechargement quelconque sur un emplacement au sein d'une station quelconque du système global 100. Pour cela, il peut par exemple s'identifier sur le lecteur de la borne de charge qui déverrouille alors sa trappe de connexion.

A tout moment lors de l'utilisation du véhicule, lorsqu'une portière ou la trappe de connexion du véhicule est ouverte, l'unité de commande génère un signal de commande APC d'autorisation valant « 0 », soit « interdiction ».

L'usager s'identifie 608 sur le véhicule pour verrouiller les portières, puis il déclare 609 la fin de la location sur la borne de location la plus proche. Celle-ci informe le système central 102 qui communique avec l'unité de commande du véhicule pour modifier la valeur de sa donnée d'autorisation moteur ESA à « 0 » soit « interdiction.

A partir de cet instant, le calcul des conditions d'autorisation générale de roulage fournira un résultat d'interdiction, par exemple par un signal de commande APC à zéro. Le moteur ne pourra ainsi plus être démarré ou redémarré.

Il est à noter que l'identifiant de l'usager Uᵢ peut être maintenu dans la mémoire d'usager valide Uv, pendant un temps prédéterminé, ou jusqu'à une opération volontaire de réinitialisation par un opérateur, ou jusqu'à la prochaine mise à disposition du véhicule à un usager. Il est ainsi possible au dernier utilisateur de commander certaines fonctions du véhicule après la fin de la location, et en particulier au verrouillage ou déverrouillage des portes pour lui d'accéder à l'intérieur du véhicule et récupérer d'éventuels objets ou personnes qui pourraient y être restés.

## Revendications

1. Procédé de contrôle de l'utilisation d'un véhicule, notamment d'un véhicule à moteur, mis à disposition d'un usager déterminé, comprenant les étapes suivantes :
- lecture d'une donnée représentant un identifiant (IDuᵢ) dudit usager par des moyens numériques au sein d'une borne (110) ou d'un véhicule (132) connecté à une borne de rechargement (112), la borne (110) et le véhicule (132) comprenant des moyens de communication (203) avec un système informatique central (102) gérant une pluralité de véhicules et une pluralité d'usagers ;
- envoi de cet identifiant d'usager (IDuᵢ) par ces moyens numériques (200) audit système informatique central ;
- comparaison dudit identifiant d'usager par ledit système informatique central avec au moins une donnée d'une base de données d'usagers ;
- dans le cas où cette comparaison fournit un résultat validant la mise à disposition dudit véhicule audit usager, envoi par ledit système central (102) d'au moins un message vers une unité de commande (200) du véhicule permettant l'envoi immédiat ou différé d'au moins un signal de commande vers des moyens de commande (201,221) d'au moins une fonction (207) dudit véhicule, ou vers la borne de rechargement (112) à laquelle il est connecté ;
**caractérisé en ce que**
ledit message comprend une donnée d'autorisation du démarrage du moteur dudit véhicule, ledit procédé comprenant en outre une étape de mémorisation de ladite donnée d'autorisation moteur dans un emplacement mémoire (ESA) de l'unité de commande (200) ; et
et **en ce que** ledit procédé comprend en outre une étape de vérification d'au moins un état de la borne de charge (112) à laquelle ledit véhicule est raccordé, laquelle vérification conditionne elle aussi l'envoi dudit signal de commande.

2. Procédé selon la revendication 1, **caractérisé en ce que** le message est transmis à l'unité de commande (200) au sein du véhicule et déclenche une mémorisation dudit identifiant d'usager (IDuᵢ) en tant qu'identifiant d'usager valide, dans des moyens de mémoire (IDv) de ladite unité de commande (200).

3. Procédé selon la revendication 2, **caractérisé en ce que** la mémorisation de l'identifiant d'usager (IDuᵢ) en tant qu'identifiant d'usager valide, dans des moyens de mémoire (IDv) de l'unité de commande (200) s'effectue en remplacement d'un identifiant d'usager valide (IDuᵢ₋₁) d'un usager (Uᵢ₋₁) précédent.

4. Procédé selon l'une quelconque des revendications 2 ou 3, **caractérisé en ce qu'**il comprend en outre les étapes suivantes :
- lecture d'une donnée d'identifiant d'usager (IDuᵢ), au sein dudit véhicule, par des moyens de lecture (206) communiquant avec l'unité de commande (200) ;
- validation de cette donnée d'identifiant par comparaison avec la donnée d'identifiant valide (IDv) mémorisée dans ladite unité de commande ;
- en fonction du résultat de cette vérification, envoi ou non par ladite unité de commande d'au moins un signal de commande dit d'identification à des moyens de commande (201, 221) d'au moins une fonction (207) dudit véhicule ou de la borne de rechargement (112) à laquelle il est connecté.

5. Procédé selon l'une quelconque des revendications 2 à 4, **caractérisé en ce que** l'unité de commande (200) génère un signal de commande d'autorisation générale de roulage (APC) qui dépend de la valeur de l'état d'autorisation de démarrage de moteur mémorisée dans ladite unité de commande ; notamment lors d'une détection d'une commande de démarrage (208) par l'usager ou lors d'une génération d'un signal de commande de modification de l'état de verrouillage des ouvrants.

6. Procédé selon l'une quelconque des revendications précédentes, **caractérisé en ce que** le ou au moins un signal, notamment le signal de commande d'identification, déclenche des moyens de verrouillage ou de déverrouillage d'au moins un accès à une région intérieure du véhicule, notamment l'habitacle et/ou une trappe d'accès à des moyens de connexion à une borne de rechargement en énergie.

7. Procédé selon l'une quelconque des revendications précédentes, **caractérisé en ce que** le ou au moins un signal de commande, notamment le signal de commande d'autorisation de démarrage, génère un signal de démarrage d'un groupe motopropulseur et/ou une désactivation de moyens d'immobilisation du véhicule ou d'au moins un groupe motopropulseur, notamment de tous les groupes motopropulseurs.

8. Procédé de gestion d'un parc de véhicules à moteur mis à disposition d'une pluralité d'usagers, **caractérisé en ce qu'**il comprend un contrôle de chacun desdits véhicules par un procédé de contrôle selon l'une quelconque des revendications 1 à 7.

9. Installation configurée pour mettre en œuvre le procédé selon l'une quelconque des revendications 1 à 7 et comprenant un véhicule et un système informatique de gestion (102), ledit système informatique de gestion (102) comprenant des moyens de communication sans fil avec le véhicule et des moyens de mémorisation comprenant au moins une base de données d'usager et le véhicule comprenant au moins une unité de commande (MTU3, 200) agencée pour communiquer avec le système informatique (102) de gestion d'une pluralité de véhicules, installation dans laquelle l'unité de commande est connectée au sein du véhicule avec :
- des moyens d'identification d'un usager accessibles depuis l'extérieur et sans ouvrir ledit véhicule ;
- des moyens de communication sans fil avec ledit système informatique de gestion, notamment par téléphonie numérique sans fil telle que GPRS ; et
- des moyens de commande d'une ou plusieurs fonctions dudit véhicule.

## Patentansprüche

1. Verfahren zur Überwachung der Benutzung eines Fahrzeugs, insbesondere eines einem bestimmten Benutzer zur Verfügung gestellten Kraftfahrzeugs, folgende Schritte umfassend:
- Lesen einer Angabe, welche einen Identifikator (IDuᵢ) des Benutzers darstellt, durch digitale Mittel innerhalb einer Station (110) oder eines an einer Ladestation (112) angeschlossenen Fahrzeugs (132), wobei die Station (110) und das Fahrzeug (132) Mittel zur Kommunikation (203) mit einem zentralen, eine Vielzahl von Fahrzeugen und eine Vielzahl von Benutzern verwaltenden Computersystem (102) umfassen;
- Senden dieses Benutzeridentifikators (IDuᵢ) durch die digitalen Mittel (200) an das zentrale Computersystem;
- Abgleich des Benutzeridentifikators mit mindestens einer Angabe einer Benutzer-Datenbank durch das zentrale Computersystem;
- wenn aus dem Abgleich ein die Bereitstellung des Fahrzeugs an den Benutzer validierendes Ergebnis hervorgeht, Senden mindestens einer Nachricht an eine Steuereinheit (200) des Fahrzeugs durch das zentrale Computersystem (102), wodurch mindestens ein Steuersignal an Steuervorrichtungen (201, 221) mindestens einer Funktion (207) des Fahrzeugs oder an die Ladestation (112), an welcher es angeschlossen ist, sofort oder verzögert gesendet werden kann;
**dadurch gekennzeichnet, dass**
die Nachricht eine Angabe zur Startfreigabe des Motors des Fahrzeugs umfasst, wobei das Verfahren außerdem einen Schritt zur Speicherung der Angabe zur Motorfreigabe in einen Speicherplatz (ESA) der Steuereinheit (200) umfasst; und
dadurch, dass das Verfahren außerdem einen Schritt zur Überprüfung mindestens eines Zustands der Ladestation (112), an welcher das Fahrzeug angeschlossen ist, wobei das Senden des Steuersignals ebenfalls von der Überprüfung abhängt.

2. Verfahren nach Anspruch 1, **dadurch gekennzeichnet, dass** die Nachricht an die Steuereinheit (200) innerhalb des Fahrzeugs gesendet wird und ein Speichern des Benutzeridentifikators (IDuᵢ) als gültiger Benutzeridentifikator in Speichereinrichtungen (IDv) der Steuereinheit (200) auslöst.

3. Verfahren nach Anspruch 2, **dadurch gekennzeichnet, dass** das Speichern des Benutzeridentifikators (IDuᵢ) als gültiger Benutzeridentifikator in Speichereinrichtungen (IDv) der Steuereinheit (200) einen gültigen Benutzeridentifikator (IDuᵢ₋₁) eines vorangegangenen Benutzers (Uᵢ₋₁) ersetzt.

4. Verfahren nach einem der Ansprüche 2 oder 3, **dadurch gekennzeichnet, dass** es außerdem die folgenden Schritte umfasst:
- Lesen einer Angabe eines Benutzeridentifikators (IDuᵢ) innerhalb des Fahrzeugs durch Leseeinrichtungen (206), die mit der Steuereinheit (200) kommunizieren;
- Validierung dieser Identifikatorangabe durch Abgleich mit der gültigen Identifikatorangabe (IDv), die in der Steuereinheit gespeichert ist;
- in Abhängigkeit von dem Ergebnis dieser Überprüfung, Senden oder Nicht-Senden mindestens eines Steuersignals, des sogenannten Identifizierungssignals, an Steuereinrichtungen (201, 221) mindestens einer Funktion (207) des Fahrzeugs oder der Ladestation (112), an welcher es angeschlossen ist, durch die Steuereinheit.

5. Verfahren nach einem der Ansprüche 2 bis 4, **dadurch gekennzeichnet, dass** die Steuereinheit (200) ein Steuersignal zur allgemeinen Fahrfreigabe (APC) erzeugt, das von dem Wert des Zustands der in der Steuereinheit gespeicherten Motorstartfreigabe abhängt; insbesondere bei Erkennung eines Startbefehls (208) durch den Benutzer oder bei Erzeugung eines Steuersignals zur Änderung des Verriegelungszustands des Fahrzeugs.

6. Verfahren nach einem der vorhergehenden Ansprüche, **dadurch gekennzeichnet, dass** das oder mindestens ein Signal, insbesondere das Identifikationssteuersignal, Verriegelungs- oder Absperreinrichtungen mindestens eines Zutritts zu einem Innenbereich des Fahrzeugs, insbesondere dem Innenraum und/oder einer Zugangsklappe zu Anschlusseinrichtungen an einer Stromladestation, auslöst.

7. Verfahren nach einem der vorhergehenden Ansprüche, **dadurch gekennzeichnet, dass** das oder mindestens ein Steuersignal, insbesondere das Steuersignal zur Startfreigabe ein Signal zum Start eines Antriebsstrangs und/oder eine Deaktivierung von Halteeinrichtungen des Fahrzeugs oder mindestens eines Antriebsstrangs, insbesondere aller Antriebsstränge erzeugt.

8. Verfahren zur Verwaltung eines Fuhrparks von einer Vielzahl von Benutzern zur Verfügung gestellten Kraftfahrzeugen, **dadurch gekennzeichnet, dass** es eine Überwachung jedes der Fahrzeuge durch ein Überwachungsverfahren nach einem der Ansprüche 1 bis 7 umfasst.

9. Anlage, zum Umsetzen des Verfahrens nach einem der Ansprüche 1 bis 7 konfiguriert und ein Fahrzeug und ein Verwaltungscomputersystem (102) umfassend, wobei das Verwaltungscomputersystem (102) schnurlose Einrichtungen zur Kommunikation mit dem Fahrzeug und Speichereinrichtungen umfasst, welche mindestens eine Benutzerdatenbank umfassen, und wobei das Fahrzeug mindestens eine Steuereinheit (MTU3, 200) umfasst, die eingerichtet ist, mit dem Computersystem (102) zur Verwaltung einer Vielzahl von Fahrzeugen zu kommunizieren, wobei die Steuereinheit innerhalb des Fahrzeugs angeschlossen ist an:
- Einrichtungen zur Identifizierung eines Benutzers, welche von außen aus und ohne Öffnen des Fahrzeugs zugänglich sind;
- schnurlosen Einrichtungen zur Kommunikation mit dem Verwaltungscomputersystem, insbesondere über schnurlose, digitale Telefonie wie GPRS; und
- Einrichtungen zum Steuern von einer oder mehreren Funktionen des Fahrzeugs.

## Claims

1. A method for controlling the use of a vehicle, in particular of a motor vehicle, made available to a specified user, comprising the following steps:
- reading an item of data representing an identifier (IDuᵢ) of said user by digital means within a terminal (110) or a vehicle (132) connected to a recharging terminal (112), the terminal (110) and the vehicle (132) comprising means for communicating (203) with a central data processing system (102) managing a plurality of vehicles and a plurality of users;
- sending this user identifier (IDuᵢ) by the digital means (200) to said central data processing system;
- comparison of said user identifier by said central data processing system with at least one item of data of a user database;
- in the event that this comparison supplies a result validating the making available of said allocated vehicle to said user, sending, by said central system (102), of at least one message to a control unit (200) of the vehicle allowing the immediate or delayed sending of at least one command signal to control means (200,221) of at least one function (207) of said vehicle, or to the recharging terminal (112) to which it is connected;
**characterized in that**
said message comprises an item of data for authorization of starting the engine of said vehicle, said method further comprising step for storing of said item of data for authorization of starting the engine in storage means (ESA) of the control unit (200); and
**in that** said method further comprises a step of verification of at least one state of the recharging terminal (112) to which said vehicle is connected, said verification also determining the sending of the command signal.

2. The method according to claim 1, **characterized in that** the message is transmitted to a control unit (200) within the allocated vehicle and triggers storage of said user identifier (IDuᵢ) as a valid user identifier, in storage means (IDv) of said control unit (200).

3. The method according to the claim 2, **characterized in that** the storage of the user identifier (IDuᵢ) as a valid user identifier, in storage means (IDv) of the control unit (200) is carried out by replacing a valid user identifier (IDuᵢ₋₁) of a preceding user (Uᵢ₋₁).

4. The method according to anyone of the claims 2 or 3, **characterized in that** it further comprises the following steps:
- reading a user identifier item of data (IDuᵢ), within said vehicle, by reading means (206) communicating with the control unit (200);
- validation of this identifier item of data by comparing with the valid identifier item of data (IDv) stored in said control unit;
- depending on the result of this verification, sending, or not sending by said control unit, of at least one command signal, called identification command signal, to control means (201,221) of at least one function (207) of said vehicle or the recharging terminal (112) to which it is connected.

5. The method according to the any one of the claims 2 to 4, **characterized in that** the control unit (200) generates a command signal for general authorization for driving (APC) which depends on the value of the state of authorization of engine starting stored in said control unit; in particular on detecting a command for starting (208) by the user or on generation of a command signal for changing the state of locking of the doors and windows.

6. The method according to any one of the preceding claims, **characterized in that** the or at least one signal, in particular the identification command signal, triggers means for locking or unlocking of at least one access to an interior region of the vehicle, in particular the passenger compartment and/or an access lid to means for connection to a power recharging terminal.

7. The method according to any one of the preceding claims, **characterized in that** the or at least one command signal, in particular the command signal for authorization of starting, generates a signal for starting a powertrain and/or deactivation of means for immobilizing the vehicle or at least one powertrain, in particular all the powertrains.

8. The method of managing a fleet of motor vehicles made available to a plurality of users, **characterized in that** it comprises control of each of said vehicles by a method of control according to any one of claims 1 to 7.

9. An installation, configured for implementing the method according to any one of claims 1 to 7, comprising a vehicle and a management information system (102), said management information system (102) comprising means for wireless communication with the vehicle and storage means comprising at least one user database and the vehicle comprising at least one control unit (MTU3,200) arranged for communicating with the information system (102) for management of a plurality of vehicles, wherein, the control unit is, within the vehicle, connected to :
- user identification means accessible from the outside without opening said vehicle;
- means for wireless communication with said management information system, in particular by wireless digital telephony such as GPRS;
- control means of one or more functions of said vehicle.
